# EUROPEAN PATENT APPLICATION

(11) **EP 4 599 973 A1**
(43) Date of publication of application: **13.08.2025**
(21) Application number: 23874975.8
(22) Date of filing: 06.10.2023
(51) Int. Cl.: B23K 9/127, B23K 9/095, B23K 9/12, G05B 19/42

(54) **WELDING CONDITION MANAGEMENT METHOD, WELDING CONDITION MANAGEMENT PROGRAM, AND WELDING CONDITION MANAGEMENT SYSTEM**

(30) Priority: 07.10.2022 JP 2022162400
(71) Applicant: Panasonic Intellectual Property Management Co., Ltd., Kadoma-shi, Osaka 571-0057 (JP)
(72) Inventor: UCHIKATA Akimasa, Kadoma-shi, Osaka 571-0057 (JP); OKAZAKI Yoshiyuki, Kadoma-shi, Osaka 571-0057 (JP)
(74) Representative: Novagraaf International SA
(86) International application number: PCT/JP2023/036651
(87) International publication number: WO 2024/075850

(57) **Abstract**

A welding condition management method is a welding condition management method performed by a terminal device, and the welding condition management method includes: acquiring a first teaching program for causing a welding robot to execute welding, a second teaching program created by correcting the first teaching program, and welding history data related to the welding executed by using the second teaching program; and extracting and outputting a welding condition at the time of the welding based on the first teaching program, the second teaching program, and the welding history data.

## Description

### TECHNICAL FIELD

The present disclosure relates to a welding condition management method, a welding condition management program, and a welding condition management system.

### BACKGROUND ART

Patent Literature 1 discloses an off-line teaching device including a selection function, a first change function, a second change function, a welding line storage function that stores a plurality of welding lines to which welding line identification information is attached, the welding lines including a plurality of coordinate positions in a welding path and welding conditions that are information related to welding in the respective coordinate positions, and a teaching program storage function that stores a teaching program having a plurality of instructions to which the welding line identification information is attached, the teaching program including the welding conditions. The off-line teaching device changes, by the first change function, a content of the welding conditions forming the welding line selected by the selection function and changes, by the second change function, welding conditions of all commands in a teaching program that has the same welding line identification information as the welding line identification information attached to the welding line selected by the selection function, to the same content as the content changed by the first change function.

### CITATION LIST

### PATENT LITERATURE

Patent Literature 1: WO2016/136209

### SUMMARY OF INVENTION

### TECHNICAL PROBLEM

The present disclosure provides a welding condition management method, a welding condition management program, and a welding condition management system that support efficient management of welding conditions.

### SOLUTION TO PROBLEM

The present disclosure provides a welding condition management method performed by a terminal device, and the method includes: acquiring a first teaching program for causing a welding robot to execute welding, a second teaching program created by correcting the first teaching program, and welding history data related to the welding executed by using the second teaching program; and extracting and outputting a welding condition at the time of the welding based on the first teaching program, the second teaching program, and the welding history data.

The present disclosure provides a welding condition management program for causing a terminal device to execute: a step of acquiring a first teaching program for causing a welding robot to execute welding, a second teaching program created by correcting the first teaching program, and welding history data related to the welding executed by using the second teaching program; and a step of extracting and outputting a welding condition at the time of the welding based on the first teaching program, the second teaching program, and the welding history data.

The present disclosure provides a welding condition management system including: a terminal device; and a robot control device capable of controlling a welding robot that produces a workpiece by welding. The robot control device is configured to receive a change in a first teaching program for causing the welding robot to execute the welding, and create a second teaching program obtained by correcting the first teaching program based on the change, and cause the welding robot to execute the production of the workpiece based on the second teaching program, and transmit, to the terminal device, the first teaching program, the second teaching program, and welding history data related to the welding executed by using the second teaching program. The terminal device is configured to extract and output a welding condition at the time of the welding based on the first teaching program, the second teaching program, and the welding history data.

The present disclosure provides a welding condition management method performed by a robot control device capable of controlling a welding robot that produces a workpiece by welding, and the method includes: recording a first teaching program for causing the welding robot to execute the welding, a second teaching program created by correcting the first teaching program, and welding history data related to the welding executed by using the second teaching program; and extracting and outputting a welding condition at the time of the welding based on the first teaching program, the second teaching program, and the welding history data.

The present disclosure provides a welding condition management program for causing a robot control device capable of controlling a welding robot that produces a workpiece by welding to execute: a step of recording a first teaching program for causing the welding robot to execute the welding, a second teaching program created by correcting the first teaching program, and welding history data related to the welding executed by using the second teaching program; and a step of extracting and outputting a welding condition at the time of the welding based on the first teaching program, the second teaching program, and the welding history data.

### ADVANTAGEOUS EFFECTS OF INVENTION

According to the present disclosure, efficient management of welding conditions can be supported.

### BRIEF DESCRIPTION OF DRAWINGS

[FIG. 1] FIG. 1 is a schematic diagram illustrating a system configuration example of a welding system according to a first embodiment.
[FIG. 2] FIG. 2 is a diagram illustrating an internal configuration example of a robot control device, a terminal device, and a teach pendant according to the first embodiment.
[FIG. 3] FIG. 3 is a flowchart illustrating an operation procedure example of the welding system according to the first embodiment.
[FIG. 4] FIG. 4 is a diagram illustrating an example of a welding teaching program.
[FIG. 5] FIG. 5 is a diagram illustrating an example of a welding condition table according to the first embodiment.
[FIG. 6] FIG. 6 is a diagram illustrating a setting example of an offset amount of a welding line.
[FIG. 7] FIG. 7 is a diagram illustrating a setting example of the offset amount of the welding line.
[FIG. 8] FIG. 8 is a diagram illustrating a posture (angle) adjustment example of a welding torch.
[FIG. 9] FIG. 9 is a diagram illustrating a posture (angle) adjustment example of the welding torch.
[FIG. 10] FIG. 10 is a flowchart illustrating an operation procedure example of a welding system according to a modification of the first embodiment.
[FIG. 11] FIG. 11 is a diagram illustrating an example of a welding result management table according to the modification of the first embodiment.
[FIG. 12] FIG. 12 is a schematic diagram illustrating a system configuration example of a welding system according to a second embodiment.
[FIG. 13] FIG. 13 is a diagram illustrating an internal configuration example of a robot control device and a teach pendant according to the second embodiment.
[FIG. 14] FIG. 14 is a flowchart illustrating an operation procedure example of the robot control device according to the second embodiment.
[FIG. 15] FIG. 15 is a flowchart illustrating an operation procedure example of a robot control device according to a modification of the second embodiment.

### DESCRIPTION OF EMBODIMENTS

### (Background of Present Disclosure)

In the related art, in a welding site, welding conditions of a product manufactured by welding are managed as a record of a welding result of the product in terms of reproducibility of welding, quality control of the welding, and the like. In the off-line teaching device disclosed in Patent Literature 1, the coordinate position of the welding line created by an operator and the welding conditions are displayed on a display unit. The welding conditions could be different from welding conditions used for manufacturing a product as an acceptable product. However, the welding conditions created by using the off-line teaching device before the welding may be corrected by the operator at the site using an actual robot. In such a case, the welding conditions displayed on the display unit of the off-line teaching device may differ from an actual welding conditions used for manufacturing the product.

Data of the welding conditions used for manufacturing the product is collected and measured manually by the operator regarding information on the actual welding conditions (for example, an actual measurement value of a current or a voltage, an actual angle of a welding torch, or the like), and is summarized and created manually by the operator. The operator has to create a welding result each time a new product (workpiece) is manufactured, and thus has to take time and attention. Further, a robot that executes the welding cannot manufacture another product until the collection of the information on the welding conditions necessary for the creation of the welding result is completed, and an operation rate is lowered.

Hereinafter, embodiments specifically disclosing a welding condition management method, a welding condition management program, and a welding condition management system according to the present disclosure will be described in detail with reference to the drawings as appropriate. However, unnecessarily detailed descriptions may be omitted. For example, the detailed descriptions of well-known matters and the redundant description of substantially the same configuration may be omitted. This is to avoid unnecessary redundancy of the following descriptions and to facilitate understanding of those skilled in the art. The accompanying drawings and the following descriptions are provided for those skilled in the art to fully understand the present disclosure and are not intended to limit the subject matters described in the claims.

Hereinafter, an object to be subjected to main welding is defined as an "original workpiece", and an object produced (manufactured) by the main welding is defined as a "workpiece". The "workpiece" is not limited to a workpiece produced by the main welding performed once, and may be a composite workpiece produced by the main welding performed two or more times. In addition, a process of producing a workpiece by joining an original workpiece and another original workpiece to each other by a welding robot is defined as "main welding". Although a type of the main welding is not limited in the present specification, in order to make the description easy to understand, a process of joining a plurality of original workpieces to produce one workpiece will be described as an example.

### (Configuration of Welding System)

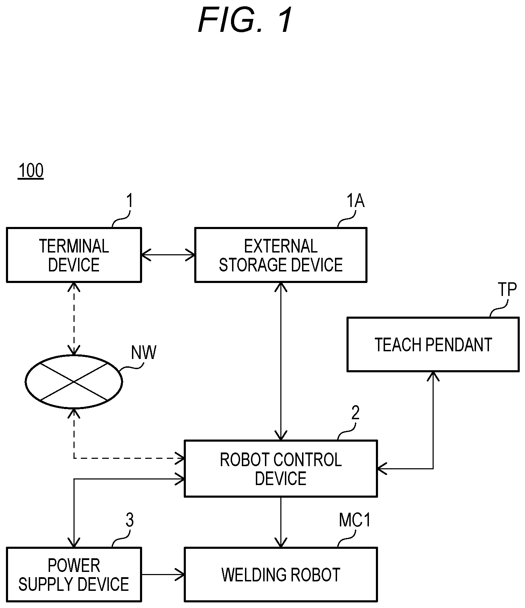

FIG. 1 is a schematic diagram illustrating a system configuration example of a welding system 100 (an example of a welding condition management system) according to a first embodiment. The welding system 100 includes a terminal device 1, an external storage device 1A, a robot control device 2, a welding robot MC1, a power supply device 3, and a teach pendant TP. The external storage device 1A is not essential and may be omitted.

The terminal device 1 is connected to the external storage device 1A, the robot control device 2, or a network NW in manner of being capable of data communication, and executes transmission and reception of data. The terminal device 1 is capable of receiving an operation from a user (for example, a welding operator and the like), and is implemented by, for example, a personal computer (PC), a notebook PC, a tablet terminal, or the like.

The terminal device 1 creates or manages a teaching program (hereinafter referred to as a "welding teaching program") for the main welding executed by the welding robot MC1.

After a process of the main welding is completed by the welding robot MC1, the terminal device 1 acquires welding history data indicating a result of the main welding transmitted from the robot control device 2. The result of the main welding here is a result corresponding to each welding condition, and indicates, for example, an actual measurement value of a current, an actual measurement value of a voltage, an actual measurement value of a welding speed, a calculation value thereof, or the like. The result of the main welding described above is merely an example, and the present disclosure is not limited thereto, and may include an actual measurement value regarding a welding pulse depending on a welding method.

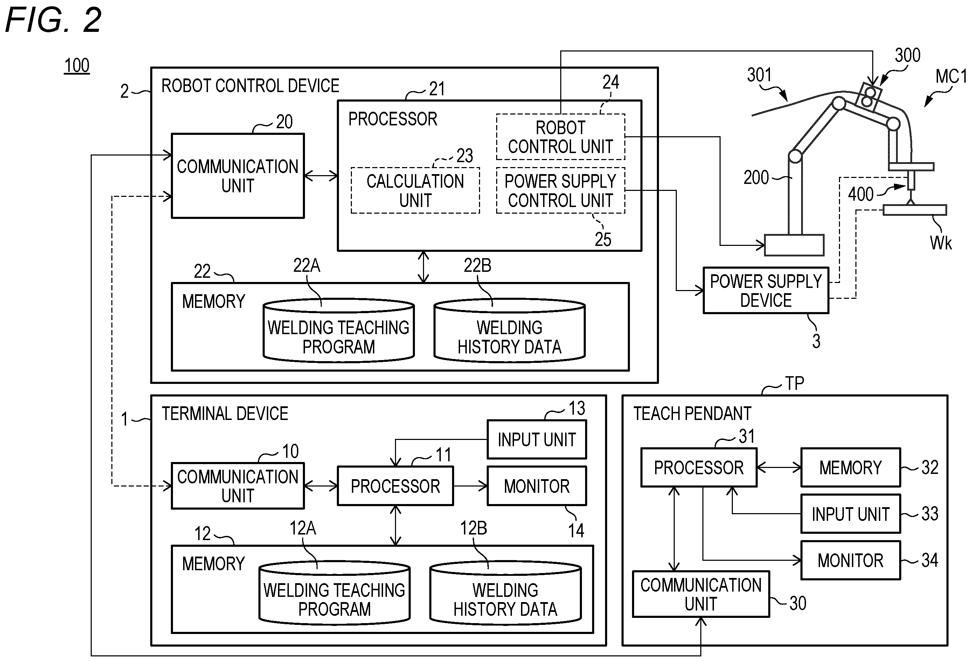

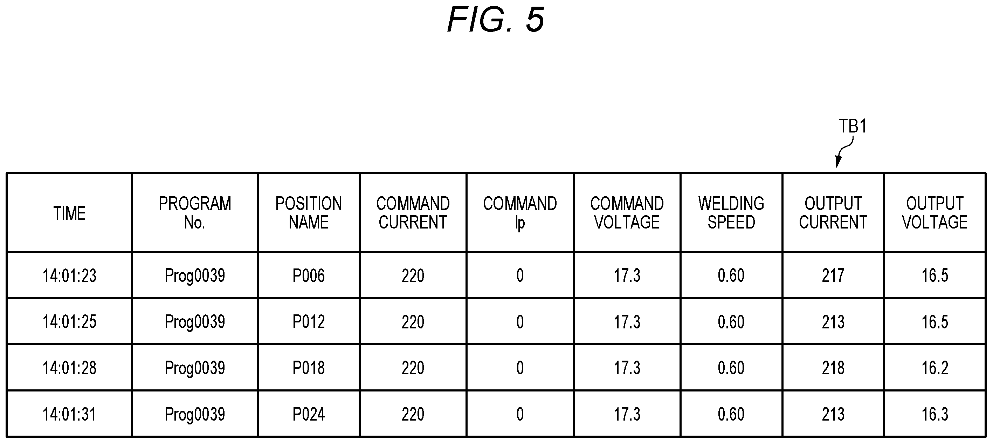

Based on the welding history data, the terminal device 1 generates welding result management information in which the result of the main welding and the welding conditions used in the main welding are linked. The terminal device 1 generates a welding condition table TB1 (an example of welding condition management data, see FIG. 5) in which the generated welding result management information is applied to a format of the welding condition, and outputs (displays) the generated welding condition table TB1 to a monitor 14 (see FIG. 2). The output (display) of the welding condition table TB1 to the monitor 14 may be omitted.

In addition, the welding conditions includes, for example, a material and a thickness of the original workpiece, a material, a wire diameter, and wire length of a welding wire 301, a set value of a welding current, a set value of a welding voltage, a feeding speed and a feeding amount of the welding wire 301, the number of times of welding, a welding time, a posture (angle) of a welding torch 400, a jig position, or a jig angle. Further, in addition to the above, the welding conditions may include, for example, information indicating a type of the main welding (for example, TIG welding, MAG welding, and pulse welding), a moving speed and a moving time of a manipulator 200 or the welding torch 400.

A welding operation teaching program is a program that is created based on at least one welding line and causes the welding robot MC1 to execute the main welding. The welding operation teaching program is created including information on a position, a distance, and an angle (posture) of the welding torch 400 that executes various operations (for example, approach, retraction, avoidance, or welding) for subjecting a workpiece Wk to the main welding using the welding torch 400, and information on the welding conditions and the like.

The external storage device 1A is implemented by, for example, an SD (registered trademark), a microSD (registered trademark), a USB memory, or the like. The external storage device 1A is connected by a user to the terminal device 1 or the robot control device 2 in manner of being able to send and receive data thereto, and executes recording (writing) and reading of the welding teaching program, the welding history data, a corrected welding teaching program, and the like.

The network NW connects between the terminal device 1 and the robot control device 2 through wireless or wired communication such that data can be transmitted and received.

The teach pendant TP is connected to the robot control device 2 in manner of being able to transmit and receive data, and operates the welding robot MC1 connected to the robot control device 2. The teach pendant TP receives an position or a posture (angle) of a welding torch according to a user operation using the actual welding robot MC1 and the workpiece Wk, a correction operation such as a start position or an end position of the main welding (that is, an offset amount of the welding line), a correction operation of the welding conditions, and the like, and transmits the same to the robot control device 2.

The robot control device 2 causes the welding robot MC1 to start execution of the main welding using a specified original workpiece, the welding conditions, and the welding teaching program.

After the main welding is executed, the robot control device 2 generates the welding history data, and transmits the welding history data to the terminal device 1 or stores the welding history data in the external storage device 1A. The robot control device 2 records the generated welding history data in a memory 22.

The welding robot MC1 is connected to the robot control device 2 in manner of being capable of data communication. The welding robot MC1 executes the main welding under control of the corresponding robot control device 2.

Next, an internal configuration example of each device constituting the welding system 100 will be described with reference to FIG. 2. FIG. 2 is a diagram illustrating an internal configuration example of the robot control device 2, the terminal device 1, and the teach pendant TP according to the first embodiment.

The welding robot MC1 executes the main welding process based on the welding teaching program using the welding torch 400 under the control of the robot control device 2. The welding robot MC1 performs, for example, arc welding in the main welding process.

However, the welding robot MC1 may execute welding (for example, laser welding and gas welding) other than the arc welding. In this case, although not shown, a laser head, instead of the welding torch 400, may be connected to a laser oscillator via an optical fiber. The welding robot MC1 is a configuration including the manipulator 200, a wire feeding device 300, a welding wire 301, and the welding torch 400. The welding robot MC1 is not limited to the configuration of the welding robot MC1 shown in FIG. 2 as long as the welding robot MC1 is configured to perform the main welding using a welding method.

The manipulator 200 includes articulated arms, and moves each arm based on a control signal from a robot control unit 24 of the robot control device 2. Accordingly, the manipulator 200 can change a positional relationship between the workpiece Wk and the welding torch 400 (for example, the position or posture (angle) of the welding torch 400 with respect to the workpiece Wk) by driving the arms.

The wire feeding device 300 controls the feeding speed of the welding wire 301 based on a control signal transmitted from the robot control device 2.

The welding wire 301 is held by the welding torch 400. When electric power is supplied from the power supply device 3 to the welding torch 400, an arc is generated between a distal end of the welding wire 301 and the workpiece Wk, and the arc welding is executed. Illustration and description of a configuration and the like of supplying a shielding gas to the welding torch 400 are omitted for the convenience of description.

Based on the user operation, the terminal device 1 creates the welding teaching program for subjecting at least one welding line to the main welding and generates the welding result management information and the welding condition table TB1. The terminal device 1 includes a communication unit 10, a processor 11, a memory 12, an input unit 13, and the monitor 14. The creation of the welding teaching program may be executed by the robot control device 2 or the teach pendant TP.

The communication unit 10 is connected to the robot control device 2 or the external storage device 1A in manner of being capable of data communication. The communication unit 10 transmits the welding teaching program created by the processor 11 to the robot control device 2 or transmits the welding teaching program to the external storage device 1A.

The processor 11 is implemented by using, for example, a central processing unit (CPU) or a field programmable gate array (FPGA), and executes various kinds of processing and controls in cooperation with the memory 12. Specifically, the processor 11 implements functions of each unit by referring to a program stored in the memory 12 and executing the program.

The processor 11 virtually forms a facility necessary for executing the main welding process of the workpiece Wk by the welding robot MC1 based on, for example, data of 3D models of the workpiece Wk and the jig, information of the workpiece Wk, jig information, or data related to the facility (for example, position information of the workpiece Wk or the jig based on the welding robot MC1). The processor 11 converts data of the virtually formed facility into image data and displays the image data on the monitor 14.

The processor 11 creates and corrects the welding teaching program based on position information of the welding line (for example, data of 3D models of the workpiece Wk and the jig, and coordinate information of each of a start point and an end point of the welding line), and welding operation setting information. The processor 11 records the created or corrected welding teaching program in the memory 12.

Based on a welding teaching program 12A recorded in the memory 12 and welding history data 12B, the processor 11 generates the welding result management information and the welding condition table TB1 (see FIG. 5) of the main welding performed by the welding robot MC1, and outputs (displays) the welding result management information and the welding condition table TB1 to the monitor 14 (see FIG. 2).

The processor 11 may generate the welding result management information and the welding condition table TB1 for each welding line, or for each workpiece Wk. The processor 11 may generate one piece of welding result management information and the welding condition table TB1 that summarize each of a plurality of welding lines, or may generate one piece of welding result management information and the welding condition table TB1 that summarize any welding line specified by the user operation.

The memory 12 includes, for example, a random access memory (RAM) as a work memory used when processing of the processor 11 is executed, and a read only memory (ROM) that stores a program that defines the processing of the processor 11. Data generated or acquired by the processor 11 is temporarily stored in the RAM. The program that defines the processing of the processor 11 is written into the ROM. Further, the memory 12 records the welding teaching program 12A, the welding history data 12B, and the like.

In the welding teaching program 12A, the welding teaching program for subjecting the at least one welding line to the main welding and identification information of the welding teaching program (for example, a name, an ID, or an identification number of the welding teaching program) are recorded in a linked manner with each other. In the welding teaching program 12A, identification information of the welding line (for example, a name, an ID, or an identification number of the welding line) to be subjected to the main welding by the welding teaching program may be further linked and recorded. Storing the welding teaching program 12A is not essential and may be omitted.

The welding teaching program 12A recorded in the memory 12 includes the welding teaching program created by using the terminal device 1, a welding teaching program generated by the teach pendant TP and transmitted to the terminal device 1, and a welding teaching program corrected by the robot control device 2 and transmitted to the terminal device 1. Further, the welding teaching program 12A may be managed (recorded) for each workpiece Wk.

In the welding history data 12B, the welding history data indicating the welding result of the main welding performed by the welding robot MC1 and the identification information of the welding teaching program (for example, a name, an ID, or an identification number of the welding teaching program) used for performing the main welding are recorded in a linked manner. The welding history data 12B may be managed (recorded) for each workpiece Wk. Storing the welding history data 12B is not essential and may be omitted.

The input unit 13 is a user interface that receives an input operation of a user, converts the input operation into an electrical signal, and outputs the electrical signal to the processor 11, and includes, for example, a mouse, a keyboard, or a touch panel. The input unit 13 receives facility information (a 3D model of the welding robot MC1, the jig, or the workpiece Wk) used for creating the welding teaching program, the position information of the welding line of the workpiece Wk, a user operation related to editing or correction of the created welding teaching program, and receives a user operation related to the generation of the welding result management information and the welding condition table TB1.

The monitor 14 may be implemented using a display device such as a liquid crystal display (LCD) or an organic electroluminescence (EL). The monitor 14 displays an image of a virtual facility (for example, a virtual welding robot, a virtual workpiece, or a virtual jig) output from the processor 11, or displays an operation trajectory of the welding torch 400 based on the welding teaching program. Further, the monitor 14 displays the image in which the operation trajectory or the like of the welding torch 400 is superimposed on the image of the virtual facility.

The robot control device 2 controls the welding robot MC1 (for example, the manipulator 200, the wire feeding device 300, or the power supply device 3), corrects the welding teaching program, or records and transmits the welding history data. The robot control device 2 includes a communication unit 20, a processor 21, and a memory 22.

The communication unit 20 is connected to the welding robot MC1, the terminal device 1, the external storage device 1A, or the teach pendant TP in manner of being capable of data communication. Although illustration is simplified in FIG. 2, data is transmitted and received between the robot control unit 24 and the manipulator 200, between the robot control unit 24 and the wire feeding device 300, and between a power supply control unit 25 and the power supply device 3 via the communication unit 20.

The communication unit 20 receives the welding teaching program transmitted from the terminal device 1 and the external storage device 1A. The communication unit 20 outputs the welding teaching program to the processor 21. The communication unit 20 transmits, to the terminal device 1, the welding history data of the main welding performed by the welding robot MC1 and the welding teaching program used for performing the main welding. The welding history data of the main welding and the welding teaching program may be transmitted via the external storage device 1A or via the network NW

The processor 21 is formed by using, for example, a CPU or an FPGA, and executes various processing and control in cooperation with the memory 22. Specifically, the processor 21 implements functions of a calculation unit 23, the robot control unit 24, and the power supply control unit 25 by referring to a program stored in the memory 22 and executing the program.

The memory 22 includes, for example, a RAM as a work memory used when the processing of the processor 21 is executed, and a ROM that stores a program that defines the processing of the processor 21. Data generated or acquired by the processor 21 is temporarily stored in the RAM. The program that defines the processing of the processor 21 is written into the ROM.

The memory 22 stores data of an execution command of the main welding, the information on the workpiece Wk produced by the main welding and the jig information, the position information on the welding line, and the like. Further, the memory 22 records a welding teaching program 22A and welding history data 22B.

The calculation unit 23 executes, based on the welding teaching program 22A, calculation of a parameter for controlling the welding robot MC1 (specifically, each of the manipulator 200, the wire feeding device 300, and the power supply device 3) controlled by the robot control unit 24.

The robot control unit 24 generates a control signal for driving the welding robot MC1 (specifically, each of the manipulator 200, the wire feeding device 300, and the power supply device 3) based on the welding teaching program 22A. The robot control unit 24 transmits the generated control signal to the welding robot MC1.

The power supply control unit 25 drives the power supply device 3 based on a calculation result of the welding teaching program 22A.

The teach pendant TP performs teaching of the welding operation by actually driving the welding robot MC1 by the user operation, thereby generating or correcting the welding teaching program. The teach pendant TP includes a communication unit 30, a processor 31, a memory 32, an input unit 33, and a monitor 34.

The communication unit 30 is connected to the robot control device 2 in manner of being capable of data communication. The communication unit 30 transmits various information for driving the welding robot MC1 to the robot control device 2.

The processor 31 is formed using, for example, a CPU or an FPGA, and executes various processing and control in cooperation with the memory 32. Specifically, the processor 31 implements functions of each unit by referring to a program stored in the memory 32 and executing the program. The processor 31 acquires a control command based on the user operation input from the input unit 33. The processor 31 creates and corrects the welding teaching program based on the acquired control command.

The memory 32 includes, for example, a RAM as a work memory used when the processing of the processor 31 is executed, and a ROM that stores a program that defines the processing of the processor 31. Data generated or acquired by the processor 31 is temporarily stored in the RAM. The program that defines the processing of the processor 31 is written into the ROM.

The input unit 33 is a user interface that receives the input operation of the user, converts the input operation into an electrical signal, and outputs the electrical signal to the processor 31, and includes, for example, a mouse, a keyboard, or a touch panel. The input unit 33 receives the user operation for generating or correcting the welding teaching program, and settings, changes, or the like regarding various settings of the welding robot MC1 (settings related to a content output to a welding history file, and the like).

The monitor 34 may be formed using a display device such as an LCD or an organic EL. The monitor 34 displays an editing screen for creating or correcting the welding teaching program, setting or changing the various settings of the welding robot MC1, and the like.

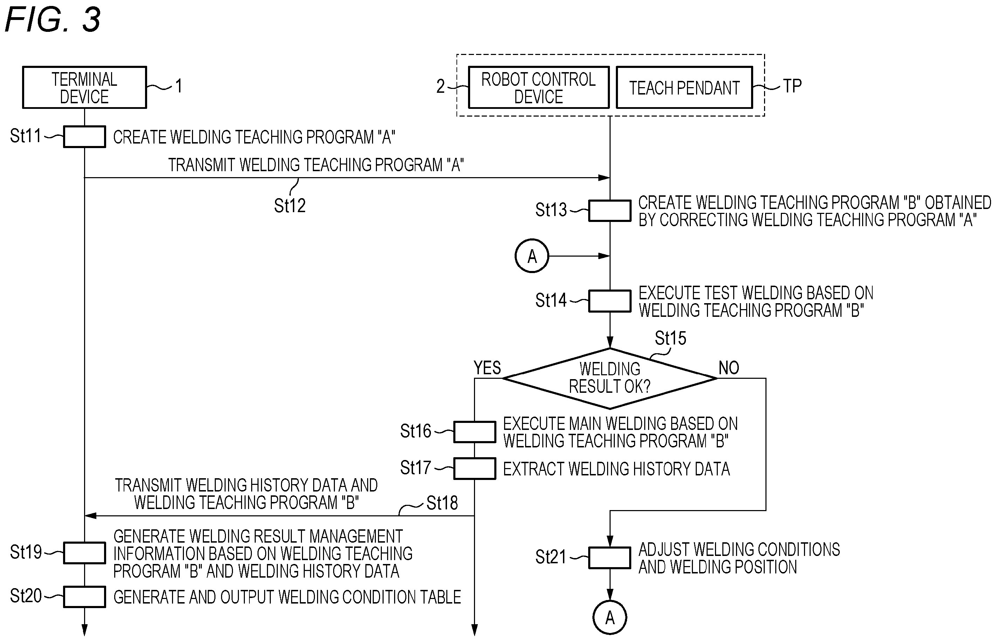

Next, an operation procedure example of the welding system 100 according to the first embodiment will be described with reference to FIG. 3. FIG. 3 is a flowchart illustrating the operation procedure example of the welding system 100 according to the first embodiment.

In FIG. 3, in order to make the description easy to understand, the welding teaching program created by the terminal device 1 is described as a welding teaching program "A", the welding teaching program that has been corrected based on adjustment to the welding conditions or a position of the welding line is described as a welding teaching program "B", but the present disclosure is not limited thereto. For example, the creation of the welding teaching program "A" by the terminal device 1 is not essential and may be omitted. Further, the welding teaching program "B" may not be a program generated by correcting the welding teaching program "A", and may be a program generated by the welding robot MC1 and the teach pendant TP.

The terminal device 1 creates the welding teaching program "A" for subjecting the at least one welding line to the main welding based on the user operation (St11). The terminal device 1 transmits the created welding teaching program "A" to the robot control device 2 (St12).

The robot control device 2 records the welding teaching program "A" transmitted from the terminal device 1 in the memory 22. The teach pendant TP receives the user operation such as adjustment (change) of the welding conditions or position adjustment of the welding line. The teach pendant TP creates the welding teaching program "B" obtained by correcting the welding teaching program "A" stored in the memory 22 of the robot control device 2 based on the user operation (St13). The robot control device 2 corrects the welding teaching program "A" and overwrites the welding teaching program "A" with the welding teaching program "B".

The robot control device 2 may record the welding teaching program "B" and the welding teaching program "A" without overwriting the welding teaching program "A" with the welding teaching program "B". Further, the processing of step St13 is not essential, and may be omitted if the adjustment (change) of the welding conditions or the position adjustment of the welding line is unnecessary.

The robot control device 2 drives the welding robot MC1 based on the welding teaching program "B" to execute the main welding (test welding) to the workpiece Wk (St14).

The user determines whether a result of the test welding performed in step St14 is passed (that is, "OK") (St15). When the user determines that a quality of the manufactured workpiece Wk is passed (St15, YES), the user performs the input operation to request the teach pendant TP to perform the main welding based on the welding teaching program "B".

The robot control device 2 uses the welding teaching program "B" based on the control command transmitted from the teach pendant TP to drive the welding robot MC1 to execute the main welding to the workpiece Wk (St16). The robot control device 2 acquires the welding history data (for example, welding conditions, position information of the welding line, a position and posture (angle) information of the welding torch 400, or identification information of the welding teaching program) of the main welding performed by using the welding teaching program "B", and records the acquired welding history data in the memory 22.

The robot control device 2 refers to the memory 22, extracts the welding history data of the main welding performed using the welding teaching program "B" (St17), and transmits the extracted welding history data to the terminal device 1 (St18). Each of the welding teaching program "B" and the welding history data may be stored in the external storage device 1A and transferred from the robot control device 2 to the terminal device 1 via the external storage device 1A. Further, the processing of step St16 may be omitted. In such a case, the robot control device 2 extracts the welding history data of the main welding executed in the processing of step St14.

The terminal device 1 records the welding teaching program "B" and the welding history data transmitted from the robot control device 2 in the memory 12, and generates the welding result management information of the main welding based on the welding history data (St19). The terminal device 1 generates the welding condition table TB1 (see FIG. 5) based on the generated welding result management information, and outputs the welding condition table TB1 to the monitor 14 (St20). The output processing of the welding condition table TB1 may be omitted.

When the user determines that the quality of the manufactured workpiece Wk is not passed (that is, is not "OK") as the result of the test welding performed in step St14 (St15, NO), the user operates the teach pendant TP to adjust (change) the welding conditions or perform the position adjustment of the welding line.

The teach pendant TP refers to the welding teaching program "B" stored in the robot control device 2 and receives the user operation such as adjustment (change) of the welding conditions or position adjustment of the welding line. Based on the user operation, the teach pendant TP adjusts the welding conditions or the position information of the welding line in the welding teaching program "B" used in the test welding in step St14, and causes the robot control device 2 to correct the welding teaching program "B" (St21).

Accordingly, the welding system 100 according to the first embodiment can acquire the welding history data (welding conditions) executed based on the corrected welding teaching program even when the welding teaching program is corrected based on the change of the welding conditions using the teach pendant TP or the like at a welding site after the welding teaching program is created using the terminal device 1, the teach pendant TP, or the like. Further, the welding system 100 can more easily generate the welding condition table TB1 by extracting various types of data (data related to the welding teaching program, data related to the workpiece Wk, data related to the welding line, data related to the welding conditions, or the like) corresponding to various items in the welding condition table TB1 for managing the welding conditions from the corrected welding teaching program and the welding history data, and applying the various types of data to the various items in the welding condition table TB1.

Accordingly, the welding system 100 can automatically generate the welding condition table TB1 used for the reproducibility, the quality control, or the like of the welding. Therefore, since the user can reduce the number of man-hours required to create the welding condition table TB1, the user can reduce a stop time of various facilities (for example, the welding robot MC1, or the robot control device 2) that produce the workpiece Wk, and improve an operation rate of the various facilities.

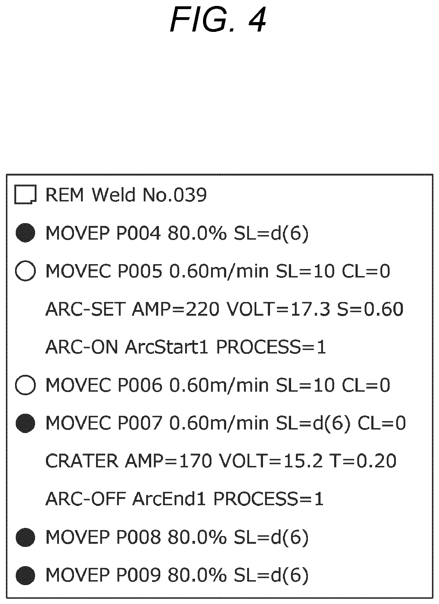

An example of the welding teaching program will be described with reference to FIG. 4. FIG. 4 is a diagram illustrating the example of the welding teaching program. A welding teaching program "REM Weld No. 039" illustrated in FIG. 4 is a welding teaching program for subjecting, to the main welding, the welding line to which an identification number "No. 039" is given.

The robot control device 2 moves the welding torch 400 to a welding start position P004 based on a teaching program "MOVEP P004 80.0% SL = d(6)" of the welding robot MC1.

After the welding torch 400 is moved to the welding start position P004, the robot control device 2 drives the welding robot MC1 based on each of teaching programs "MOVEC P005 0.60 m/min SL = 10 CL = 0", "ARC-SET AMP = 220 VOLT = 17.3 S = 0.60", and "ARC-ON ArcStart1 PROCESS = 1". The robot control device 2 sets the power supply device 3 to a command current 220 A and a command voltage 17.3 V, and causes the welding robot MC1 to perform the welding while moving the welding torch 400 from the welding start position P004 toward a welding position P005 at a speed of 0.60 m/min.

After the welding to the welding position P005 is completed, the robot control device 2 causes the welding torch 400 to perform the welding while moving the welding torch 400 from the welding position P005 toward a welding position P006 at a speed of 0.60 m/min based on a teaching program "MOVEC P006 0.60 m/min".

After the welding torch 400 is moved to the welding position P006, the robot control device 2 causes the welding torch 400 to perform the welding while moving the welding torch 400 from the welding position P006 to a welding position P007 at a speed of 0.60 m/min based on each of teaching programs "MOVEC P007 0.60 m/min SL = d(6) CL = 0", "CRATER AMP = 170 VOLT = 15.2 T = 0.20", and "ARC-OFF ArcEnd1 PROCESS = 1".

After the welding to the welding position P007 is completed, the robot control device 2 controls the welding robot MC1 based on teaching programs "MOVEP P008 80.0% SL = d(6)" and "MOVEP P009 80.0% SL = d(6)", retracts the welding torch 400 of the welding robot MC1 to a retracted position P008, and ends the main welding.

Next, the welding condition table TB1 will be described with reference to FIG. 5. FIG. 5 is a diagram illustrating an example of the welding condition table TB1 in the first embodiment. The items of the welding conditions in the welding condition table TB1 shown in FIG. 5 are examples, and the present disclosure is not limited thereto.

The welding condition table TB1 is generated by the processor 11 of the terminal device 1 and is output (displayed) to the monitor 14. The items of the welding conditions in the welding condition table TB1 may be freely set by the user operation.

The welding condition table TB1 shown in FIG. 5 shows the welding result and the welding conditions of the main welding of each of four welding lines based on a welding teaching program "Prog0039".

An item "time" indicates information on a time for which the main welding is performed. The item "time" may record a date and a time when the main welding is performed.

An item "program No." indicates the identification information (here, a name) of the welding teaching program used in the main welding.

An item "position name" indicates the identification information of the welding line. Here, as an example of the identification information of the welding line, a name of the welding position set for each welding point is shown.

An item "command current" indicates a current value set in the power supply device 3 among welding conditions taught by the welding teaching program.

An item "command Lp" indicates a low current value of a pulse current set in the power supply device 3 among the welding conditions taught by the welding teaching program.

An item "command voltage" indicates a voltage value set in the power supply device 3 among the welding conditions taught by the welding teaching program.

An item "welding speed" is a moving speed (welding speed) of the welding torch 400 in the main welding taught by the welding teaching program.

An item "output current" is an actual measurement value of a current output from the power supply device 3 during the main welding. The actual measurement value of the current is measured by an instrument (not shown) such as an ammeter connected between the power supply device 3 and the welding robot MC1. The instrument outputs the actual measurement value of the measured current to the robot control device 2.

The item "output voltage" is an actual measurement value of a voltage of the power supply device 3 during the main welding. The actual measurement value of the voltage is measured by an instrument (not shown) such as a voltmeter connected between the power supply device 3 and the welding robot MC1. The instrument outputs the actual measurement value of the measured voltage to the robot control device 2.

The items in the welding condition table TB1 in the first embodiment may be freely set by the user, and any item related to welding related information, the information of the workpiece Wk, the identification information of the welding teaching program, the identification information of the welding line, the welding conditions, or the like may be set. Further, when the welding condition table TB1 includes the welding history data of each of the plurality of welding lines, the welding condition table TB1 may include an item related to a welding order in which each welding line is main-welded.

Accordingly, the welding system 100 can generate the welding condition table TB1 including welding conditions requested by the user.

As described above, the terminal device 1 according to the first embodiment acquires a second welding teaching program (an example of a second teaching program) created by correcting a first welding teaching program (an example of a first teaching program) for causing the welding robot MC1 to perform the welding and the welding history data related to the welding performed using the second welding teaching program, and extracts and outputs the welding conditions at the time of welding based on the second welding teaching program and the welding history data.

Accordingly, the terminal device 1 according to the first embodiment can support the management of the welding conditions which is performed by the user by outputting the welding result management information obtained by extracting the welding conditions (for example, a welding order of the welding line, a jig angle, the current value or the voltage value of the power supply device 3 taught by the welding teaching program, the actual measurement value of the current or the voltage of the power supply device 3 at the time of main welding, or the posture (angle) of the welding torch 400) at the time of the main welding. Therefore, the user is not required to collect the welding conditions at the time of the main welding, which is necessary to create the welding condition table TB1, and can efficiently create the welding condition table TB1. Further, the terminal device 1 can further shorten the operation stop time of the facility (robot control device 2, power supply device 3, welding robot MC1, or the like) associated with the collection of the welding conditions performed by the user, and thus it is possible to further improve the operation rate of the facility.

The terminal device 1 according to the first embodiment generates and outputs the welding condition table TB1 (an example of the welding condition management data) in which the extracted welding conditions at the time of welding is applied to a predetermined format (specifically, a format of the welding condition table TB1). Accordingly, the terminal device 1 according to the first embodiment can support the management of the welding conditions performed by the user by generating and outputting the welding condition table TB1 in which each welding condition is summarized in a manageable manner.

The terminal device 1 according to the first embodiment receives a specification operation related to the welding conditions at the time of welding to be extracted, and extracts the welding conditions at the time of welding based on the specified welding conditions. Accordingly, the terminal device 1 according to the first embodiment can extract the welding conditions specified by the user from each of the second welding teaching program and the welding history data. Therefore, the user can specify the welding conditions extracted from the second welding teaching program and the welding history data as the welding conditions requested by the user and the welding conditions required by a delivery destination of the workpiece Wk, and can support the management of the welding conditions.

As described above, the welding system 100 (an example of the welding condition management system) according to the first embodiment includes the terminal device 1 and the robot control device 2 capable of controlling the welding robot MC1 that produces the workpiece Wk by the welding. The robot control device 2 receives the change to the first welding teaching program (an example of the first teaching program) for causing the welding robot MC1 to perform the welding, creates the second welding teaching program (an example of the second teaching program) obtained by correcting the first welding teaching program based on the change, causes the welding robot MC1 to execute the production of the workpiece Wk based on the second welding teaching program, and transmits, to the terminal device 1, the second welding teaching program and the welding history data related to the welding executed using the second welding teaching program. The terminal device 1 extracts and outputs the welding conditions during the welding based on the second welding teaching program and the welding history data.

Accordingly, the welding system 100 according to the first embodiment can support the management of the welding conditions performed by the user by causing the terminal device 1 to output the welding result management information including the welding conditions (for example, the welding order of the welding line, the jig angle, the current value or the voltage value of the power supply device 3 taught by the welding teaching program, the actual measurement value of the current or the voltage of the power supply device 3 at the time of the main welding, or the posture (angle) of the welding torch 400) at the time of the main welding, which are collected by the robot control device 2. Therefore, the welding system 100 can further shorten the operation stop time of the facility (robot control device 2, power supply device 3, welding robot MC1, or the like) associated with the collection of the welding conditions performed by the user, and thus it is possible to further improve the operation rate of the facility.

### (Modification of First Embodiment)

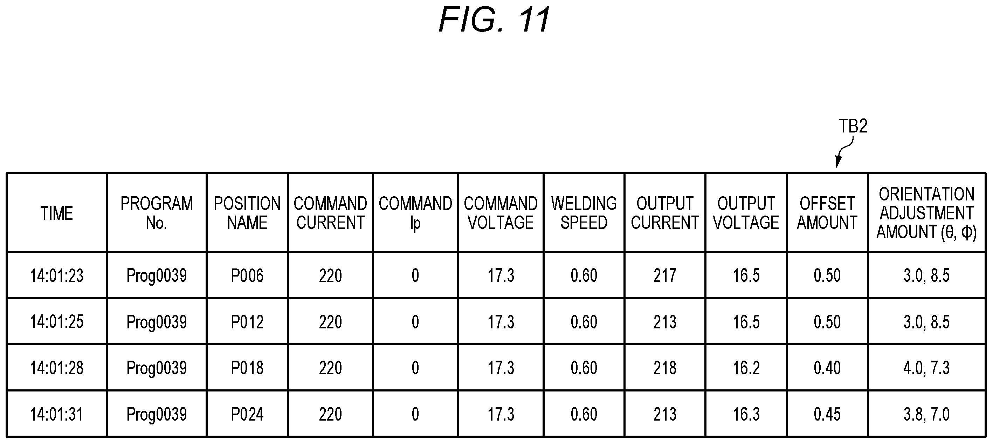

The welding system 100 according to the first embodiment has been described as an example of generating the welding condition table TB1 and the welding result management information including information such as welding conditions or a position of the welding line after the adjustment when the welding teaching program is corrected by adjusting the welding conditions, the position of the welding line, and the like using the teach pendant TP in accordance with the determination of the user based on the know-how of the main welding (step St13 or step St21 in FIG. 3). The welding system 100 (an example of the welding condition management system) according to a modification of the first embodiment will be described with reference to an example of generating a welding condition table TB2 (an example of the welding condition management data, see FIG. 11) and welding result management information including information such as welding conditions, a position of the welding line, and the like after adjustment, when not only the welding conditions or the position of the welding line are adjusted, but also position adjustment (adjustment of an offset amount) of the welding torch 400 with respect to the position of the welding line, a posture (angle) adjustment of the welding torch 400, and the like are performed.

In the modification of the first embodiment, the adjustment of the welding conditions, the position of the welding line, or the like is not essential, and any one of the position adjustment (adjustment of the offset amount) of the welding torch 400 with respect to the position of the welding line and the posture (angle) adjustment of the welding torch 400 may be performed.

In the following description of the welding system 100 according to the modification of the first embodiment, the same components as those of the welding system 100 according to the first embodiment are denoted by the same reference numerals, and description thereof is omitted.

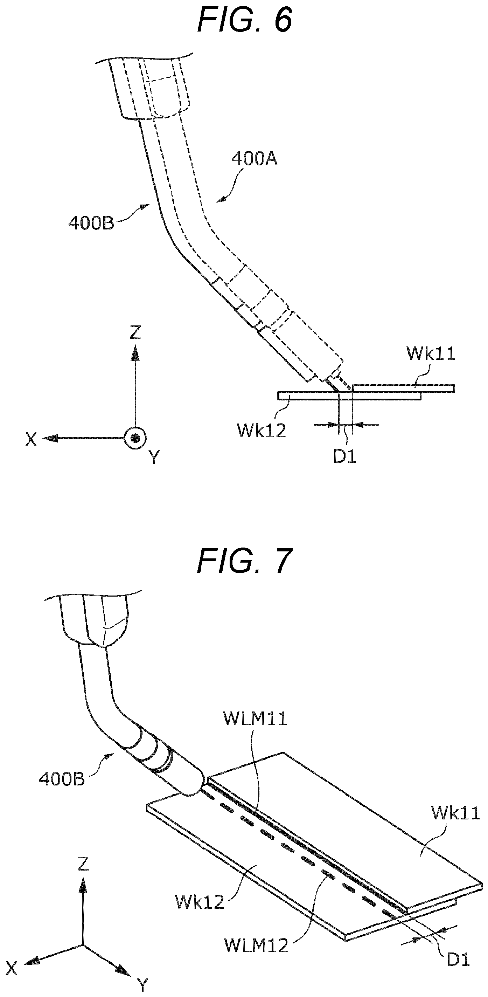

First, the position adjustment (adjustment of the offset amount) of the welding line will be described with reference to FIGS. 6 and 7. FIG. 6 is a diagram illustrating a setting example of an offset amount of a welding line WLM11. FIG. 7 is a diagram illustrating a setting example of the offset amount of the welding line WLM11.

For example, as shown in FIGS. 6 and 7, when performing lap welding in which an original workpiece Wk11 and an original workpiece Wk12 are welded along an overlapping part (position of the welding line WLM11) with the original workpiece Wk11 and the original workpiece Wk12 overlapped, the position of the welding line WLM11 taught by the welding teaching program may be offset so that the original workpiece is not welded and does not fall at the time of the main welding. Such position adjustment of the welding line is performed by the user operation using the teach pendant TP or the like.

A procedure for setting the offset amount will be described below.

A welding torch 400A shown in FIG. 6 shows a state in which the welding line WLM11 is disposed at a position where the main welding can be performed based on a welding teaching program for subjecting the welding line WLM11 between the original workpiece Wk11 and the original workpiece Wk12 to the main welding.

The teach pendant TP receives the user operation to offset the position of the welding line by only a distance D1 in a direction away from the overlapping portion of the original workpiece Wk11 and the original workpiece Wk12 (position of the welding line WLM11). Setting of the offset amount herein may be achieved by correcting a position of at least one teaching point between a start position (coordinate) and an end position (coordinate) of the welding line to be subjected to the main welding to a position moved by the distance D1.

Based on the user operation, the teach pendant TP corrects the welding teaching program stored in the memory 22 of the robot control device 2 to a welding teaching program in which the position of the welding line WLM11 is adjusted to a position of a welding line WLM12 offset by the distance D1. The robot control device 2 associates and records the welding teaching program before the correction and the welding teaching program after the correction.

As described above, the welding system 100 according to the modification of the first embodiment can execute an operation for setting the offset amount regarding the position of the welding line, and the correction of the welding teaching program based on the operation for setting the offset amount.

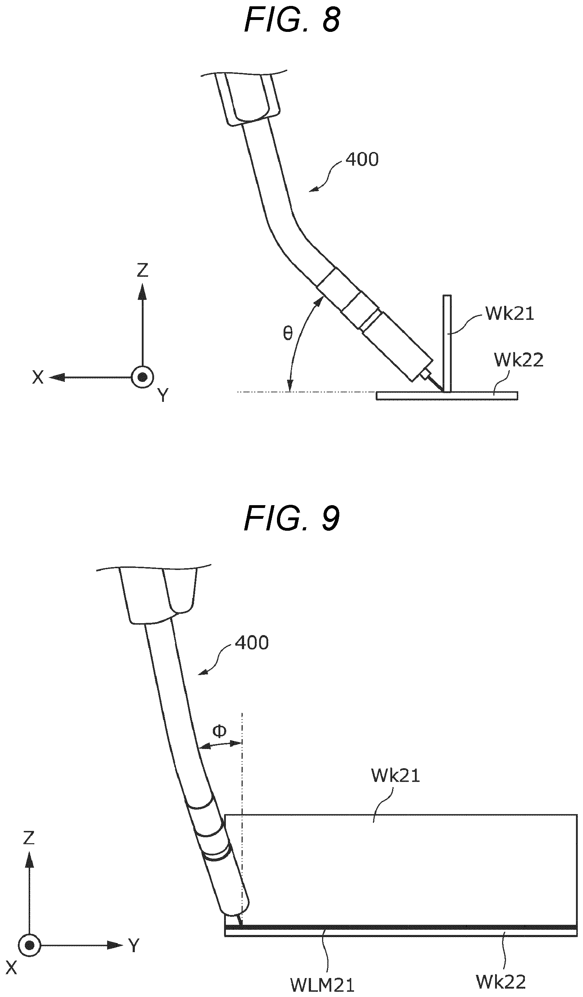

Next, the posture (angle) adjustment of the welding torch 400 will be described with reference to FIGS. 8 and 9. FIG. 8 is a diagram illustrating a posture (angle) adjustment example of the welding torch 400. FIG. 9 is a diagram illustrating a posture (angle) adjustment example of the welding torch 400.

For example, as shown in FIGS. 8 and 9, when various operations (for example, approach, retraction, avoidance, welding, or the like) for the main welding are performed, the posture (angle) of the welding torch 400 may be adjusted in order to avoid contact and interference of the welding torch 400 with each of original workpieces Wk21 and Wk22, jigs (not shown) that fix the original workpieces Wk21 and Wk22, or the like, and to adjust a penetration amount. Such posture (angle) adjustment of the welding torch 400 is performed by the user operation using the teach pendant TP or the like.

Hereinafter, a procedure for adjusting the posture (angle) of the welding torch 400 will be described.

The teach pendant TP receives a user operation to adjust the posture (angle) of the welding torch 400 at the time of main-welding a welding line WLM21 to an angle θ from a Z axis on a ZX plane and to an angle Φ from a Y axis on a ZY plane.

Based on the user operation, the teach pendant TP corrects the welding teaching program to the welding teaching program in which the posture (angle) of the welding torch 400 at the time of main-welding the welding line WLM21 is adjusted to the angle θ from the Z axis on the ZX plane and to the angle Φ from the Y axis on the ZY plane.

The robot control device 2 records the welding teaching program after the correction and the welding teaching program before the correction in the memory 22.

As described above, the welding system 100 according to the modification of the first embodiment can perform the adjustment of the posture (angle) of the welding torch 400 in the various operations (for example, approach, retraction, avoidance, or welding) and the correction of the welding teaching program based on the posture (angle) adjustment of the welding torch 400.

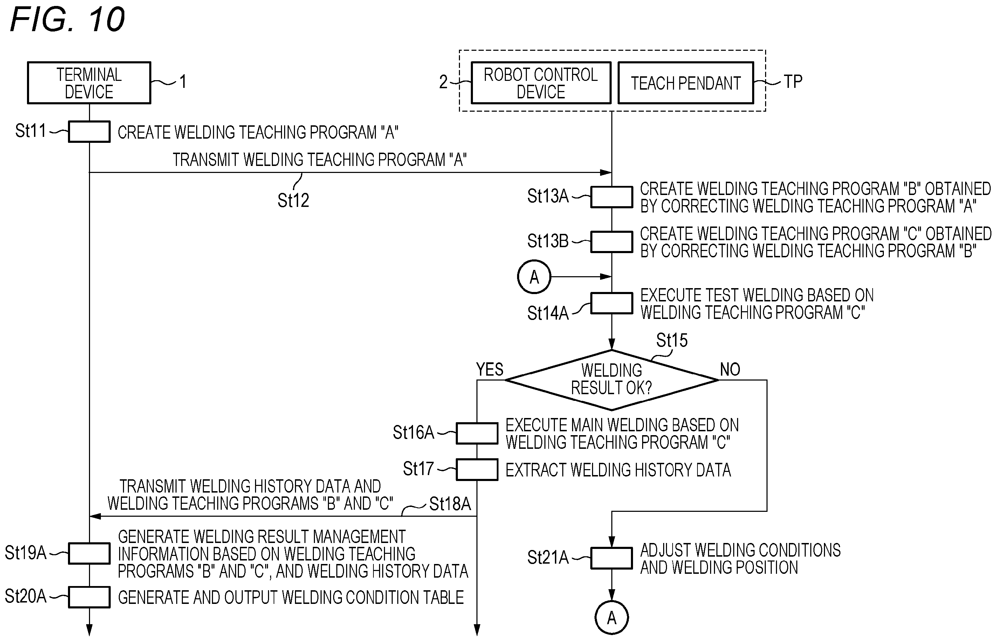

Next, the welding system 100 according to the modification of the first embodiment will be described with reference to FIG. 10. FIG. 10 is a flowchart illustrating an operation procedure example of the welding system 100 according to the modification of the first embodiment.

In FIG. 10, in order to make the description easy to understand, the welding teaching program created by the terminal device 1 is described as the welding teaching program "A", the welding teaching program obtained by correcting the position of the welding line and the like is described as the welding teaching program "B", a welding teaching program obtained by correcting the position adjustment (adjustment of the offset amount) of the welding torch 400 to the position of the welding line, and the posture (angle) adjustment of the welding torch 400, or the like is described as a welding teaching program "C", but the present disclosure is not limited thereto. For example, the creation of the welding teaching program "A" by the terminal device 1 is not essential and may be omitted. Further, the welding teaching program "B" may not be a program generated by correcting the welding teaching program "A", and may be a program generated by the welding robot MC1 and the teach pendant TP.

The terminal device 1 creates the welding teaching program "A" for subjecting the at least one welding line to the main welding based on the user operation (St11). The terminal device 1 transmits the created welding teaching program "A" to the robot control device 2 (St12).

The robot control device 2 records the welding teaching program "A" transmitted from the terminal device 1 in the memory 22. The teach pendant TP receives the user operation such as position adjustment of the welding line. The teach pendant TP creates the welding teaching program "B" obtained by correcting the welding teaching program "A" stored in the memory 22 of the robot control device 2 based on the user operation (St13A). The robot control device 2 corrects the welding teaching program "A" and overwrites the welding teaching program "A" with the welding teaching program "B".

The robot control device 2 may record the welding teaching program "B" and the welding teaching program "A" without overwriting the welding teaching program "A" with the welding teaching program "B". Further, the processing of step St13A is not essential, and may be omitted if the adjustment (change) of the welding conditions or the position adjustment of the welding line is unnecessary.

The teach pendant TP receives the user operation such as adjustment (change) of the welding conditions, position adjustment (adjustment of the offset amount) of the welding torch 400 with respect to the position of the welding line, and posture (angle) adjustment of the welding torch 400. The teach pendant TP creates the welding teaching program "C" obtained by further correcting the welding teaching program "B" stored in the memory 22 of the robot control device 2 based on the user operation (St13B). The robot control device 2 records the welding teaching program "B" recorded in the memory 22 and the welding teaching program "C".

The robot control device 2 drives the welding robot MC1 based on the welding teaching program "C" to execute the main welding (test welding) to the workpiece Wk (St14A).

The user determines whether a result of the test welding executed in step St14A is passed (St15). When the user determines that a quality of the manufactured workpiece Wk is passed (St15, YES), the user performs an input operation to request the teach pendant TP to perform the main welding based on the welding teaching program "C".

The robot control device 2 uses the welding teaching program "C" based on a control command transmitted from the teach pendant TP to drive the welding robot MC1 to execute the main welding to the workpiece Wk (St16A). The robot control device 2 acquires welding history data (for example, welding conditions, position information of the welding line, position or posture (angle) information of the welding torch 400, or identification information of the welding teaching program) of the main welding performed by using the welding teaching program "C", and records the acquired welding history data in the memory 22.

The robot control device 2 refers to the memory 22, extracts the welding history data of the main welding performed using the welding teaching program "C" (St17A), and transmits the extracted welding history data to the terminal device 1 (St18A). Each of the welding teaching programs "B" and "C" and the welding history data may be stored in the external storage device 1A and transferred from the robot control device 2 to the terminal device 1 via the external storage device 1A. Further, the processing of step St16A may be omitted. In such a case, the robot control device 2 extracts the welding history data of the main welding executed in the processing of step St14A.

The terminal device 1 records, in the memory 12, the welding teaching programs "B" and "C" and the welding history data transmitted from the robot control device 2. The terminal device 1 extracts various types of data corresponding to items in the welding condition table TB2 based on the welding history data. The various types of data extracted here is, for example, a welding order of the welding line, an actual measurement value of a current or voltage of the power supply device 3, or a speed (welding speed) of the welding torch 400.

Further, the terminal device 1 compares the position information or posture (angle) of the welding line in the welding teaching program "B" with the position information or the posture (angle) of the welding line in the welding teaching program "C", and calculates the offset amount or the posture (angle) adjustment amount of the welding position of the welding torch 400 corresponding to the items in the welding condition table TB2.

The terminal device 1 associates the various types of extracted data with data such as the calculated offset amount or posture (angle) adjustment amount of the welding position of the welding torch 400 and the welding teaching program, and generates welding result management information (St19A).

The terminal device 1 applies various types of data in the generated welding result management information and the data such as the offset amount or posture (angle) adjustment amount of the welding position of the welding torch 400 to the items in the welding condition table TB2, and generates and outputs the welding condition table TB2 (see FIG. 11) (St20A).

When the user determines that the quality of the manufactured workpiece Wk is not passed (that is, is not "OK") as the result of the test welding performed in step St14A (St15, NO), the user operates the terminal device 1 or the teach pendant TP to adjust (change) the welding conditions or perform the position adjustment of the welding line.

The teach pendant TP refers to the welding teaching program "C" stored in the robot control device 2 and receives the user operation such as adjustment (change) of the welding conditions or position adjustment of the welding line. Based on the user operation, the teach pendant TP adjusts the welding conditions or the position information of the welding line in the welding teaching program "C" used in the test welding in step St14A, and causes the robot control device 2 to correct the welding teaching program "C" (St21A).

Accordingly, the welding system 100 according to the modification of the first embodiment can acquire the welding history data (welding conditions) executed based on the corrected welding teaching program even when the welding teaching program is corrected based on the change of the welding conditions using the teach pendant TP or the like at the welding site after the welding teaching program is created using the terminal device 1, the teach pendant TP, or the like. Further, the welding system 100 can more easily generate the welding condition table TB2 by extracting the various types of data (data related to the welding teaching program, data related to the workpiece Wk, data related to the welding line, data related to the welding conditions, or the like) corresponding to the various items in the welding condition table TB2 for managing the welding conditions from the corrected welding teaching program and the welding history data, and applying the various types of data to the various items in the welding condition table TB2.

Accordingly, the welding system 100 can automatically generate the welding condition table TB2 used for the welding reproducibility, the quality control of the welding, or the like. Therefore, since the user can reduce the number of man-hours required to create the welding condition table TB2, the user can reduce a stop time of various facilities (for example, the welding robot MC1, or the robot control device 2) that produce the workpiece Wk, and improve an operation rate of the various facilities.

Next, the welding condition table TB2 will be described with reference to FIG. 11. FIG. 11 is a diagram illustrating an example of the welding condition table TB2 in the first embodiment. The items of the welding conditions in the welding condition table TB2 shown in FIG. 11 are examples, and the present disclosure is not limited thereto.

The welding condition table TB2 is generated by the processor 11 of the terminal device 1 and is output (displayed) to the monitor 14. The items of the welding conditions in the welding condition table TB2 may be freely set by the user operation.

The welding condition table TB2 shown in FIG. 11 shows the welding result and the welding conditions of the main welding of each of the four welding lines based on the welding teaching program "Prog0039". The welding condition table TB2 includes three items indicating information related to the main welding and eight items related to the welding conditions. In the following description of the welding condition table TB2, descriptions of the same items as those of the welding condition table TB1 (see FIG. 5) will be omitted.

An item "offset amount" is an offset amount set for the welding torch 400 of the main welding.

An item "posture" is an actual measurement value of the posture (angle θ, Φ) of the welding torch 400 of the main welding.

The items in the welding condition table TB2 in the modification of the first embodiment may be freely set by the user, and any item related to the welding related information, the information of the workpiece Wk, the identification information of the welding teaching program, the identification information of the welding line, the welding conditions, or the like may be set. Further, when the welding condition table TB2 includes the welding history data of each of the plurality of welding lines, the welding condition table TB2 may include an item related to the welding order in which each welding line is main-welded.

Accordingly, the welding system 100 can generate the welding condition table TB2 including welding conditions requested by the user.

As described above, the terminal device 1 according to the modification of the first embodiment acquires a first welding teaching program for causing the welding robot MC1 to perform the welding, a second welding teaching program created by correcting the first welding teaching program, and the welding history data related to the welding performed using the second welding teaching program, and extracts and outputs the welding conditions at the time of the welding based on the first welding teaching program, the second welding teaching program, and the welding history data.

The first welding teaching program here may be the welding teaching program "A" created by the terminal device 1 shown in FIG. 10, or may be the welding teaching program "B" created by the teach pendant TP and the robot control device 2. Further, the second welding teaching program may be a welding teaching program created by correcting the welding teaching program created by the terminal device 1 or the teach pendant TP and the robot control device 2.

Accordingly, the terminal device 1 according to the modification of the first embodiment can support the management of the welding conditions performed by the user by outputting the welding result management information including not only the welding conditions at the time of the main welding (for example, a welding order of the welding line, a jig angle, a current value or a voltage value of the power supply device 3 taught by the welding teaching program, an actual measurement value of the current or the voltage of the power supply device 3 at the time of main welding, or a posture (angle) of the welding torch 400), but also welding conditions different from original welding conditions or settings added or corrected in the original welding conditions (for example, an offset amount set in the position information of the main welding, which is the welding condition at the time of welding, an offset amount set at the welding position of the welding torch 400, and an adjustment amount of the posture (angle) of the welding torch 400). Therefore, the user is not required to collect the welding conditions at the time of the main welding, which is necessary to create the welding condition table TB2, and can efficiently create the welding condition table TB2. Further, the terminal device 1 can further shorten the operation stop time of the facility (robot control device 2, power supply device 3, welding robot MC1, or the like) associated with the collection of the welding conditions performed by the user, and thus it is possible to further improve the operation rate of the facility.

The terminal device 1 according to the modification of the first embodiment generates and outputs the welding condition management data in which the extracted welding conditions at the time of welding is applied to a predetermined format (specifically, a format of the welding condition table TB2). Accordingly, the terminal device 1 according to the modification of the first embodiment can support the management of the welding conditions performed by the user by generating and outputting the welding condition table TB2 in which each welding condition is summarized in a manageable manner.

The terminal device 1 according to the modification of the first embodiment calculates the posture of the welding torch 400 of the welding robot MC1 at the time of welding based on comparison between the first welding teaching program and the second welding teaching program, and outputs the welding conditions at the time of welding including the calculated posture of the welding torch 400. Accordingly, the terminal device 1 according to the modification of the first embodiment can support the management of the welding conditions performed by the user by outputting the welding result management information including the welding conditions different from the original welding conditions or the settings added or corrected in the original welding conditions (for example, an offset amount set in the position information of the main welding, which is the welding condition at the time of welding, an offset amount set at the welding position of the welding torch 400, and an adjustment amount of the posture (angle) of the welding torch 400).

The terminal device 1 according to the modification of the first embodiment calculates the offset amount of the welding line at the time of welding based on the comparison between the first welding teaching program and the second welding teaching program, and outputs the welding conditions at the time of welding including the calculated offset amount of the welding line. Accordingly, the terminal device 1 according to the modification of the first embodiment can support the management of the welding conditions performed by the user by outputting the welding result management information including the welding conditions different from the original welding conditions or the settings added or corrected in the original welding conditions (for example, an offset amount set in the position information of the main welding, which is the welding condition at the time of welding, an offset amount set at the welding position of the welding torch 400, and an adjustment amount of the posture (angle) of the welding torch 400).

The terminal device 1 according to the modification of the first embodiment receives the specification operation related to the welding conditions at the time of welding to be extracted, and extracts the welding conditions at the time of welding based on the specified welding conditions. Accordingly, the terminal device 1 according to the modification of the first embodiment can extract the welding conditions specified by the user from each of the second welding teaching program and the welding history data. Therefore, the user can specify the welding conditions extracted from the second welding teaching program and the welding history data as the welding conditions requested by the user and the welding conditions required by a delivery destination of the workpiece Wk, and can support the management of the welding conditions.

The welding system 100 (an example of the welding condition management system) according to the modification of the first embodiment includes the terminal device 1 and the robot control device 2 capable of controlling the welding robot MC1 that produces the workpiece Wk by the welding. The robot control device 2 receives the change to the first welding teaching program for causing the welding robot MC1 to perform the welding, creates the second welding teaching program obtained by correcting the first welding teaching program based on the change, causes the welding robot MC1 to execute the production of the workpiece based on the second welding teaching program, and transmits, to the terminal device 1, the first welding teaching program, the second welding teaching program, and the welding history data related to the welding executed using the second welding teaching program. The terminal device 1 extracts and outputs the welding conditions at the time of welding based on the first welding teaching program, the second welding teaching program, and the welding history data.

Accordingly, the welding system 100 according to the modification of the first embodiment can support the management of the welding conditions performed by the user by causing the terminal device 1 to output the welding result management information including the welding conditions (for example, the welding order of the welding line, the jig angle, the current value or the voltage value of the power supply device 3 taught by the welding teaching program, the actual measurement value of the current or the voltage of the power supply device 3 at the time of the main welding, or the posture (angle) of the welding torch 400) at the time of the main welding, which are collected by the robot control device 2. Therefore, the welding system 100 can further shorten the operation stop time of the facility (robot control device 2, power supply device 3, welding robot MC1, or the like) associated with the collection of the welding conditions performed by the user, and thus it is possible to further improve the operation rate of the facility.

### (Second Embodiment)

The welding system 100 according to the first embodiment and the modification of the first embodiment includes the terminal device 1, and an example in which the welding conditions at the time of welding are extracted and output using the terminal device 1 is shown. A welding system 100A according to a second embodiment does not include the terminal device 1, and an example in which welding conditions at the time of welding are extracted and output using a robot control device 2A will be described.

The welding system 100A according to the second embodiment has the same configuration as the welding system 100 according to the first embodiment and the modification of the first embodiment. Accordingly, in the following description, the same components as those of the welding system 100 according to the first embodiment and the modification of the first embodiment are denoted by the same reference numerals, and a description thereof will be omitted.

### (Configuration of Welding System)

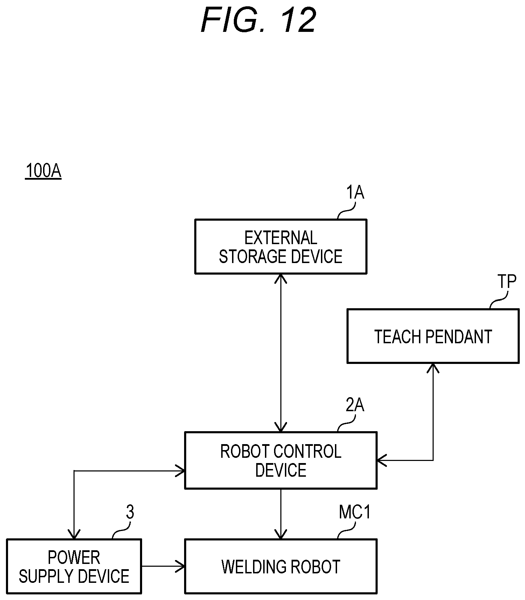

FIG. 12 is a schematic diagram illustrating a system configuration example of the welding system 100A according to the second embodiment. The welding system 100A includes the external storage device 1A, the robot control device 2A, the welding robot MC1, the power supply device 3, and the teach pendant TP. The external storage device 1A is not essential and may be omitted.

The robot control device 2A is communicably connected to the teach pendant TP, and generates or corrects a welding teaching program based on a control command transmitted from the teach pendant TP. Further, the robot control device 2A causes the welding robot MC1 to start execution of main welding using a specified original workpiece, welding conditions, and the welding teaching program.

After the main welding is performed, the robot control device 2A generates welding history data and stores the welding history data in a memory 22C or the external storage device 1A.

Based on the welding history data, the robot control device 2A generates welding result management information in which a result of the main welding and the welding conditions used in the main welding are linked. The robot control device 2A generates the welding condition table TB1 (an example of welding condition management data, see FIG. 5) in which the generated welding result management information is applied to a format of the welding conditions, and outputs (displays) the generated welding condition table TB1 to the external storage device 1A, an external terminal (not illustrated), or the like.

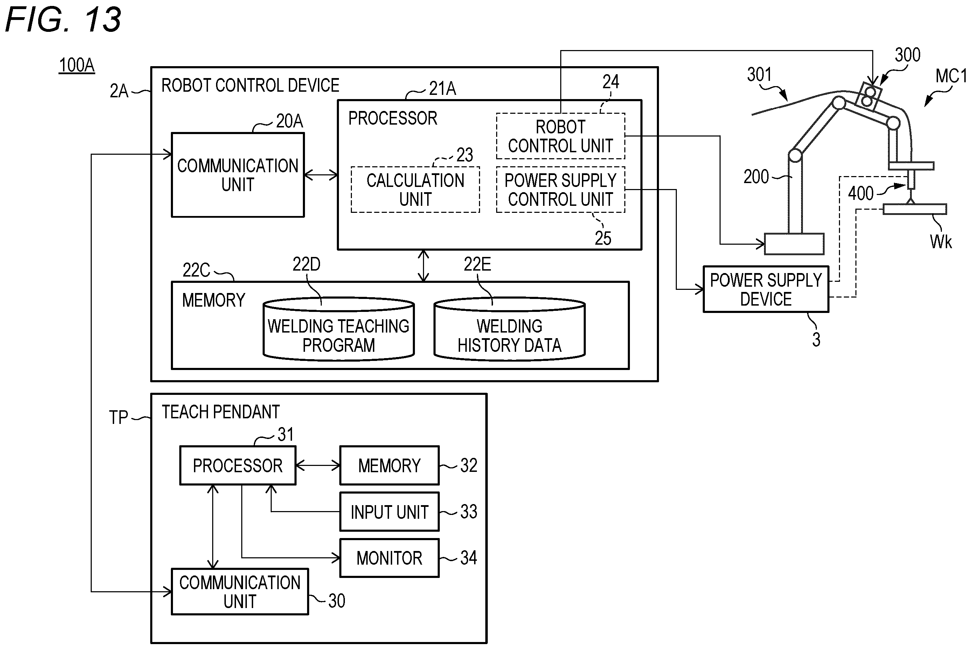

Next, an internal configuration example of each device constituting the welding system 100A will be described with reference to FIG. 13. FIG. 13 is a diagram illustrating an internal configuration example of the robot control device 2A and the teach pendant TP according to the second embodiment.

The robot control device 2A controls the welding robot MC1 (for example, the manipulator 200, the wire feeding device 300, or the power supply device 3), corrects the welding teaching program, or records or transmits the welding history data. The robot control device 2A includes a communication unit 20A, a processor 21A, and the memory 22C.

The communication unit 20A is connected to the welding robot MC1, the external storage device 1A, or the teach pendant TP in manner of being capable of data communication. Although illustration is simplified in FIG. 13, data is transmitted and received between the robot control unit 24 and the manipulator 200, between the robot control unit 24 and the wire feeding device 300, and between the power supply control unit 25 and the power supply device 3 via the communication unit 20A.

The communication unit 20A receives the welding teaching program transmitted from the external storage device 1A, or receives the control command of the teach pendant TP. The communication unit 20A outputs the received welding teaching program and control command to the processor 21A. Further, the communication unit 20A transmits, to the external storage device 1A, the welding teaching program, the welding history data, the welding condition table TB1, or the like generated by the processor 21A.

The processor 21A is formed using, for example, a CPU or an FPGA, and executes various processing and control in cooperation with the memory 22C. Specifically, the processor 21A implements functions of the calculation unit 23, the robot control unit 24, and the power supply control unit 25 by referring to a program stored in the memory 22C and executing the program.

The processor 21A creates and corrects the welding teaching program based on position information of a welding line taught by the teach pendant TP (for example, coordinate information of each of a start point and an end point of a welding line) and welding operation setting information. The processor 21A records the created or corrected welding teaching program in the memory 22C.

Further, based on a welding teaching program 22D recorded in the memory 22C and welding history data 22E, the processor 21A generates the welding result management information and the welding condition table TB1 (see FIG. 5) of the main welding performed by the welding robot MC1, and outputs (displays) the welding result management information and the welding condition table TB1 to the external storage device 1A or the like.

The memory 22C includes, for example, a RAM as a work memory used when processing of the processor 21A is executed, and a ROM that stores a program defining the processing of the processor 21A. Data generated or acquired by the processor 21A is temporarily stored in the RAM. The program that defines the processing of the processor 21A is written into the ROM.

The memory 22C stores data of an execution command of the main welding, information on the workpiece Wk produced by the main welding and jig information, the position information on the welding line, and the like. Further, the memory 22C stores the welding teaching program 22D and the welding history data 22E.

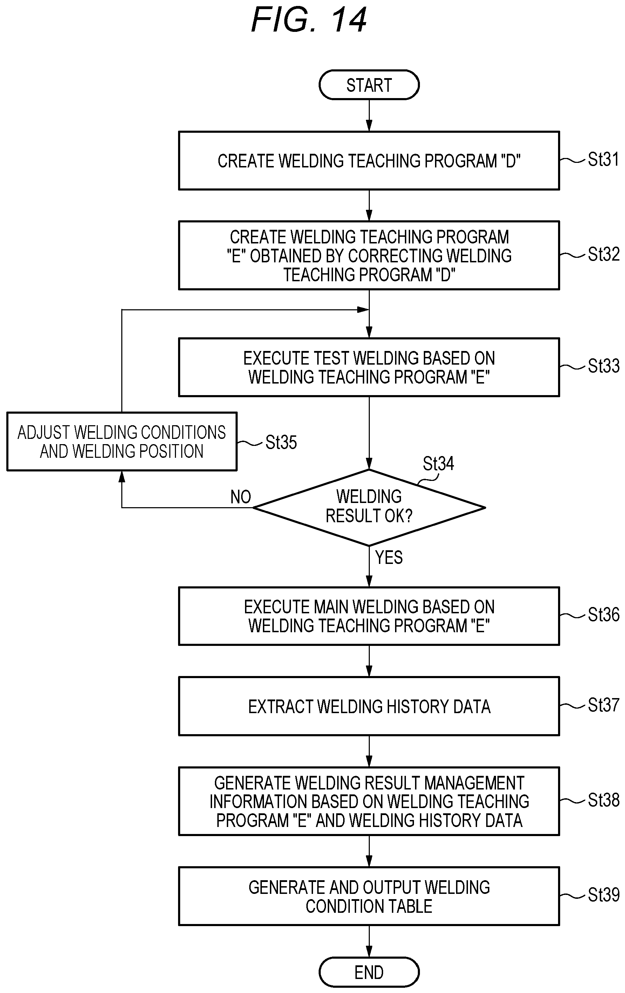

Next, an operation procedure example of the welding system 100A according to the second embodiment will be described with reference to FIG. 14. FIG. 14 is a flowchart illustrating the operation procedure example of the welding system 100A according to the second embodiment.

In FIG. 14, in order to make the description easy to understand, a welding teaching program before correction is described as a welding teaching program "D", the welding teaching program "D" corrected based on adjustment of the welding conditions or the position of the welding line will be described as the welding teaching program "E", but the present disclosure is not limited thereto.

The robot control device 2A creates the welding teaching program "D" for subjecting at least one welding line to the main welding by various teachings using the teach pendant TP (St31), and records the welding teaching program "D" in the memory 22C.

The teach pendant TP receives the user operation such as adjustment (change) of the welding conditions or position adjustment of the welding line. The teach pendant TP creates the welding teaching program "E" by correcting the welding teaching program "D" stored in the memory 22C of the robot control device 2A based on the user operation (St32), overwrites the welding teaching program "D" with the welding teaching program "E" to record the welding teaching program "E" in the memory 22C. The robot control device 2A may record the welding teaching program "D" and the welding teaching program "E" in the memory 22C.

The robot control device 2A drives the welding robot MC1 based on the welding teaching program "E" to execute the main welding (test welding) to the workpiece Wk (St33).

The user determines whether a result of the test welding performed in step St33 is passed (that is, "OK") (St34). When the user determines that a quality of the manufactured workpiece Wk is passed (St34, YES), the user performs an input operation to request the teach pendant TP to perform the main welding based on the welding teaching program "E".

On the other hand, when the user determines that the quality of the manufactured workpiece Wk is not passed (that is, is not "OK") as the result of the test welding performed in step St33 (St34, NO), the user operates the teach pendant TP to adjust (change) the welding conditions or perform the position adjustment of the welding line (St35).

The robot control device 2A uses the welding teaching program "E" based on the control command transmitted from the teach pendant TP to drives the welding robot MC1 to execute the main welding to the workpiece Wk (St36). The robot control device 2A acquires welding history data (for example, welding conditions, position information of the welding line, position or posture (angle) information of the welding torch 400, or identification information of the welding teaching program) of the main welding performed by using the welding teaching program "E", and records the acquired welding history data in the memory 22C.

The robot control device 2A refers to the memory 22C, extracts the welding history data of the main welding executed using the welding teaching program "E" (St37), and records the extracted welding history data in the memory 22C. The processing of step St36 may be omitted. In such a case, the robot control device 2A extracts the welding history data of the main welding executed in the processing of step St33.

The robot control device 2A generates the welding result management information of the main welding based on the welding teaching program "E" and the welding history data (St38). The robot control device 2A generates the welding condition table TB1 (see FIG. 5) based on the generated welding result management information, and outputs the welding condition table TB1 to the external storage device 1A or the like (St39). The output processing of the welding condition table TB1 may be omitted. Further, the robot control device 2A may output the welding result management information to the external storage device 1A.

As described above, the robot control device 2A according to the second embodiment can acquire the welding history data (welding conditions) executed based on the corrected welding teaching program even when the welding teaching program is corrected based on the change of the welding conditions using the teach pendant TP or the like at a welding site after the welding teaching program is created. Further, the robot control device 2A can more easily generate the welding condition table TB1 by extracting various types of data (data related to the welding teaching program, data related to the workpiece Wk, data related to the welding line, data related to the welding conditions, or the like) corresponding to various items in the welding condition table TB1 (see FIG. 5) for managing the welding conditions from the corrected welding teaching program and the welding history data, and applying the various types of data to the various items in the welding condition table TB1.

Accordingly, the robot control device 2A can automatically generate the welding condition table TB1 used for the welding reproducibility, the quality control of the welding, or the like.

As described above, the robot control device 2A according to the second embodiment can control the welding robot MC1 that produces the workpiece Wk by the welding, records a second welding teaching program (an example of a second teaching program) created by correcting a first welding teaching program (an example of a first teaching program) for causing the welding robot MC1 to perform the welding, and the welding history data related to the welding performed using the second welding teaching program, and extracts and outputs the welding conditions at the time of welding based on the second welding teaching program and the welding history data.

Accordingly, the robot control device 2A according to the second embodiment can support the management of the welding conditions which is performed by the user by outputting the welding result management information obtained by extracting the welding conditions (for example, a welding order of the welding line, a jig angle, a current value or a voltage value of the power supply device 3 taught by the welding teaching program, an actual measurement value of the current or the voltage of the power supply device 3 at the time of main welding, or a posture (angle) of the welding torch 400) at the time of the main welding. Therefore, the user is not required to collect the welding conditions at the time of the main welding, which is necessary to create the welding condition table TB1, and can efficiently create the welding condition table TB1. Further, the terminal device 1 can further shorten the operation stop time of the facility (robot control device 2, power supply device 3, welding robot MC1, or the like) associated with the collection of the welding conditions performed by the user, and thus it is possible to further improve the operation rate of the facility.

### (Modification of Second Embodiment)

The welding system 100A according to the second embodiment has been described as an example of generating the welding condition table TB1 and the welding result management information including information such as welding conditions or a position of the welding line after the adjustment when the welding teaching program is corrected by adjusting the welding conditions, the position of the welding line, and the like using the teach pendant TP in accordance with the determination of the user based on the know-how of the main welding (step St32 or step St35 in FIG. 14). The welding system 100A according to a modification of the second embodiment will be described with reference to an example of generating the welding condition table TB2 (an example of the welding condition management data, see FIG. 11) and welding result management information including information such as welding conditions, a position of the welding line, and the like after adjustment, when not only the welding conditions or the position of the welding line are adjusted, but also position adjustment (adjustment of an offset amount, see FIG. 6) of the welding torch 400 with respect to the position of the welding line, a posture (angle) adjustment (see FIG. 7) of the welding torch 400, and the like are performed.

In the modification of the second embodiment, the adjustment of the welding conditions, the position of the welding line, or the like is not essential, and any one of the position adjustment (adjustment of the offset amount) of the welding torch 400 with respect to the position of the welding line and the posture (angle) adjustment of the welding torch 400 may be performed.

In the following description of the welding system 100A according to the modification of the second embodiment, the same components as those of the welding system 100A according to the second embodiment are denoted by the same reference numerals, and description thereof is omitted.

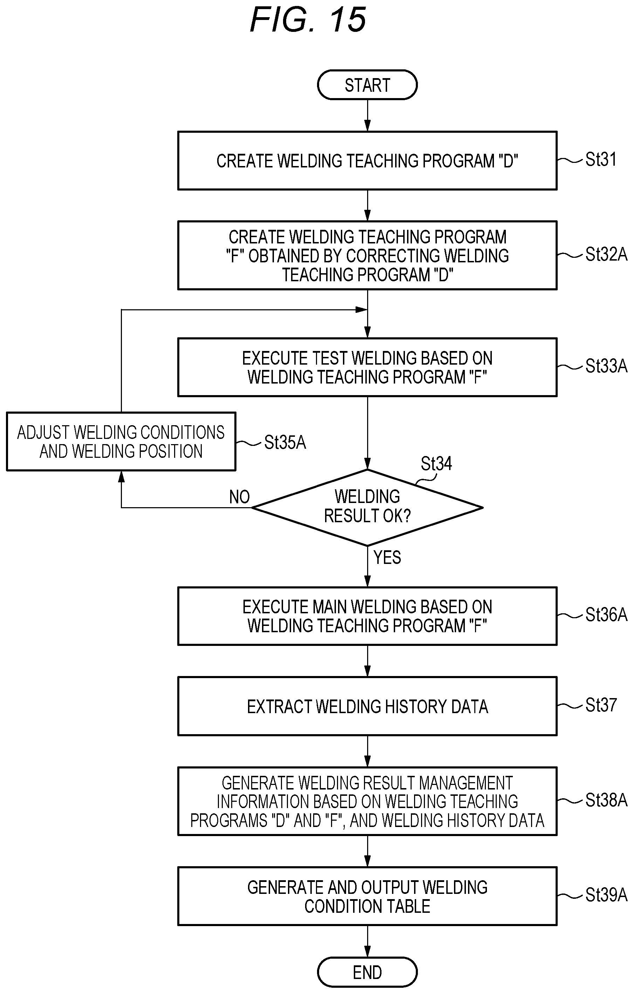

Next, the welding system 100A according to the modification of the second embodiment will be described with reference to FIG. 15. FIG. 15 is a flowchart illustrating an operation procedure example of the welding system 100A according to the modification of the second embodiment.

In FIG. 15, in order to make the description easy to understand, a welding teaching program before correction or a corrected welding teaching program obtained by performing the correction based on the adjustment to the welding conditions, the position of the welding line position, or the like will be described as the welding teaching program "D", and the welding teaching program "D" obtained by correcting the position adjustment (adjustment of the offset amount) of the welding torch 400 with respect to the position of the welding line and the posture (angle) adjustment of the welding torch 400 is described as a welding teaching program "F", but the present disclosure is not limited thereto.

The robot control device 2A creates the welding teaching program "D" for subjecting at least one welding line to the main welding by various teachings using the teach pendant TP (St31), and records the welding teaching program "D" in the memory 22C.

The teach pendant TP receives the user operation such as adjustment (change) of the welding conditions or position adjustment of the welding line. The teach pendant TP creates the welding teaching program "F" by correcting the welding teaching program "D" stored in the memory 22C of the robot control device 2A based on the user operation (St32A), associates the welding teaching program "D" with the welding teaching program "F" to record the welding teaching program "F" in the memory 22C.

The robot control device 2A drives the welding robot MC1 based on the welding teaching program "F" to execute the main welding (test welding) to the workpiece Wk (St33A).

The user determines whether a result of the test welding performed in step St33A is passed (that is, "OK") (St34). When the user determines that a quality of the manufactured workpiece Wk is passed (St34, YES), the user performs an input operation to request the teach pendant TP to perform the main welding based on the welding teaching program "F".

On the other hand, when the user determines that the quality of the manufactured workpiece Wk is not passed (that is, is not "OK") as the result of the test welding performed in step St33A (St34, NO), the user operates the teach pendant TP to adjust (change) the welding conditions or perform the position adjustment of the welding line (St35A).

The robot control device 2A uses the welding teaching program "F" based on the control command transmitted from the teach pendant TP to drives the welding robot MC1 to execute the main welding to the workpiece Wk (St36A). The robot control device 2A acquires welding history data (for example, welding conditions, position information of the welding line, position or posture (angle) information of the welding torch 400, or identification information of the welding teaching program) of the main welding performed by using the welding teaching program "F", and records the acquired welding history data in the memory 22C.

The robot control device 2A refers to the memory 22C, extracts the welding history data of the main welding executed using the welding teaching program "F" (St37), and records the extracted welding history data in the memory 22C. The processing of step St36A may be omitted. In such a case, the robot control device 2A extracts the welding history data of the main welding executed in the processing of step St33A.

The robot control device 2A generates the welding result management information of the main welding based on the welding teaching program "F" and the welding history data (St38A). The robot control device 2A generates the welding condition table TB2 (see FIG. 11) based on the generated welding result management information, and outputs the welding condition table TB2 to the external storage device 1A or the like (St39A). The output processing of the welding condition table TB2 may be omitted. Further, the robot control device 2A may output the welding result management information to the external storage device 1A.

As described above, the robot control device 2A according to the second embodiment can acquire the welding history data (welding conditions) executed based on the corrected welding teaching program even when the welding teaching program is corrected based on the change of the welding conditions using the teach pendant TP or the like at a welding site after the welding teaching program is created. Further, the robot control device 2A can more easily generate the welding condition table TB2 by extracting various types of data (data related to the welding teaching program, data related to the workpiece Wk, data related to the welding line, data related to the welding conditions, or the like) corresponding to various items in the welding condition table TB2 (see FIG. 5) for managing the welding conditions from the corrected welding teaching program and the welding history data, and applying the various types of data to the various items in the welding condition table TB1.

Accordingly, the robot control device 2A can automatically generate the welding condition table TB2 used for the reproducibility, the quality control, or the like of the welding.

As described above, the robot control device 2A according to the modification of the second embodiment can control the welding robot MC1 that produces the workpiece Wk by the welding, records a first welding teaching program (an example of a first teaching program) for causing the welding robot MC1 to execute the welding, a second welding teaching program (an example of a second teaching program) created by correcting the first welding teaching program, and the welding history data related to the welding executed using the second welding teaching program, and extracts and outputs the welding conditions at the time of welding based on the first welding teaching program, the second welding teaching program, and the welding history data.

Accordingly, the robot control device 2A according to the modification of the second embodiment can support the management of the welding conditions which is performed by the user by outputting the welding result management information obtained by extracting the welding conditions (for example, a welding order of the welding line, a jig angle, a current value or a voltage value of the power supply device 3 taught by the welding teaching program, an actual measurement value of the current or the voltage of the power supply device 3 at the time of main welding, or a posture (angle) of the welding torch 400) at the time of the main welding. Therefore, the user is not required to collect the welding conditions at the time of the main welding, which is necessary to create the welding condition table TB2, and can efficiently create the welding condition table TB2. Further, the terminal device 1 can further shorten the operation stop time of the facility (robot control device 2, power supply device 3, welding robot MC1, or the like) associated with the collection of the welding conditions performed by the user, and thus it is possible to further improve the operation rate of the facility.

Although various embodiments have been described above with reference to the drawings, it is needless to say that the present disclosure is not limited to such examples. It is apparent to those skilled in the art that various changes, corrections, substitutions, additions, deletions, and equivalents can be conceived within the scope of the claims, and it should be understood that such changes, corrections, substitutions, additions, deletions, and equivalents also fall within the technical scope of the present disclosure. In addition, components in the various embodiments described above may be freely combined without departing from the gist of the disclosure.

The present application is based on Japanese Patent Application No. 2022-162400 filed on October 7, 2022, and the contents thereof are incorporated herein by reference.

### INDUSTRIAL APPLICABILITY

The present disclosure is useful as a welding condition management method, a welding condition management program, and a welding condition management system that support efficient management of welding conditions.

### REFERENCE SIGNS LIST

1: terminal device
1A: external storage device
2, 2A: robot control device
3: power supply device
10, 20, 20A, 30: communication unit
11, 21, 21A, 31: processor
12, 22, 22C, 32: memory
12A, 22A, 22D: welding teaching program
12B, 22B, 22E: welding history data
13, 33: input unit
14, 34: monitor
100, 100A: welding system
200: manipulator
300: wire feeding device
301: welding wire
400, 400A, 400B: welding torch
MC1: welding robot
NW: network
TB1, TB2: welding condition table
TP: teach pendant
Wk: workpiece

## Claims

1. A welding condition management method performed by a terminal device, the method comprising:
acquiring a first teaching program for causing a welding robot to execute welding, a second teaching program created by correcting the first teaching program, and welding history data related to the welding executed by using the second teaching program; and
extracting and outputting a welding condition at the time of the welding based on the first teaching program, the second teaching program, and the welding history data.

2. The welding condition management method according to claim 1, wherein
the terminal device generates and outputs welding condition management data in which the extracted welding condition at the time of the welding is applied to a predetermined format.

3. The welding condition management method according to claim 1, wherein
the terminal device is configured to:
calculate a posture of a welding torch of the welding robot at the time of the welding based on comparison between the first teaching program and the second teaching program; and
output the welding condition at the time of the welding including the calculated posture of the welding torch.

4. The welding condition management method according to claim 1, wherein
the terminal device is configured to:
calculate an offset amount of a welding line at the time of the welding based on comparison between the first teaching program and the second teaching program, and
output the welding condition at the time of the welding including the calculated offset amount of the welding line.

5. The welding condition management method according to claim 1, wherein
the terminal device is configured to receive a specification operation related to the welding condition at the time of the welding to be extracted, and extract the welding condition at the time of the welding based on a specified welding condition.

6. A welding condition management program for causing a terminal device to execute:
a step of acquiring a first teaching program for causing a welding robot to execute welding, a second teaching program created by correcting the first teaching program, and welding history data related to the welding executed by using the second teaching program; and
a step of extracting and outputting a welding condition at the time of the welding based on the first teaching program, the second teaching program, and the welding history data.

7. A welding condition management system comprising:
a terminal device; and
a robot control device capable of controlling a welding robot that produces a workpiece by welding, wherein
the robot control device is configured to:
receive a change in a first teaching program for causing the welding robot to execute the welding, and create a second teaching program obtained by correcting the first teaching program based on the change; and
cause the welding robot to execute production of the workpiece based on the second teaching program, and transmit the first teaching program, the second teaching program, and welding history data related to the welding executed by using the second teaching program to the terminal device, and
the terminal device is configured to extract and output a welding condition at the time of the welding based on the first teaching program, the second teaching program, and the welding history data.

8. A welding condition management method performed by a robot control device capable of controlling a welding robot that produces a workpiece by welding, the method comprising:
recording a first teaching program for causing the welding robot to execute the welding, a second teaching program created by correcting the first teaching program, and welding history data related to the welding executed by using the second teaching program; and
extracting and outputting a welding condition at the time of the welding based on the first teaching program, the second teaching program, and the welding history data.

9. A welding condition management program for causing a robot control device capable of controlling a welding robot that produces a workpiece by welding to execute:
a step of recording a first teaching program for causing the welding robot to execute the welding, a second teaching program created by correcting the first teaching program, and welding history data related to the welding executed by using the second teaching program; and
a step of extracting and outputting a welding condition at the time of the welding based on the first teaching program, the second teaching program, and the welding history data.
